(19) Europäisches Patentamt
European Patent Office
Office européen des brevets

(11) **EP 4 769 546 A1**

(12) **EUROPEAN PATENT APPLICATION**
published in accordance with Art. 153(4) EPC

(43) Date of publication:
**01.07.2026 Bulletin 2026/27**

(21) Application number: **24898085.6**

(22) Date of filing: **26.11.2024**

(51) International Patent Classification (IPC):
**H01M 4/36** (2006.01)   **H01M 4/525** (2010.01)
**H01M 4/505** (2010.01)   **H01M 4/131** (2010.01)
**H01M 10/052** (2010.01)   **H01M 4/02** (2006.01)

(52) Cooperative Patent Classification (CPC):
**H01M 4/02; H01M 4/131; H01M 4/36; H01M 4/505;**
**H01M 4/525; H01M 10/052;** Y02E 60/10

(86) International application number:
**PCT/KR2024/018898**

(87) International publication number:
**WO 2025/116491 (05.06.2025 Gazette 2025/23)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **29.11.2023 KR 20230169313**
**20.11.2024 KR 20240166750**

(71) Applicant: **LG Energy Solution, Ltd.**
**Seoul 07335 (KR)**

(72) Inventors:
• **KIM, Hyeong Il**
**Daejeon 34122 (KR)**
• **LHO, Eun Sol**
**Daejeon 34122 (KR)**
• **HWANG, Jin Tae**
**Daejeon 34122 (KR)**
• **OH, Su Yeon**
**Daejeon 34122 (KR)**
• **LEE, Seok Jin**
**Daejeon 34122 (KR)**
• **CHO, Eun Byeol**
**Daejeon 34122 (KR)**

(74) Representative: **Hoffmann Eitle**
**Patent- und Rechtsanwälte PartmbB**
**Arabellastraße 30**
**81925 München (DE)**

(54) **CATHODE MATERIAL, MANUFACTURING METHOD THEREFOR, AND CATHODE AND LITHIUM SECONDARY BATTERY COMPRISING SAME**

(57)    The present invention relates to a positive electrode material comprising a first positive electrode active material having a secondary particle form in which a plurality of primary particles are aggregated, comprising nickel, cobalt and manganese, containing nickel in an amount of 70 mol% or more among total metals, and having a first average particle diameter ($D_{50}$), and a second positive electrode active material having a second average particle diameter ($D_{50}$) different from the first average particle diameter ($D_{50}$), wherein the first positive electrode active material has an average aspect ratio, which is an arithmetic mean value of an aspect ratio defined by Equation 1, of 0.86 to 0.94, and an average compactness, which is an arithmetic mean value of a compactness defined by Equation 2, of 0.89 to 0.96.

[Equation 1]

$$\text{Aspect ratio} = r_a/R$$

[Equation 2]

$$\text{Compactness} = r_c/R$$

In Equations 1 and 2, R is a length of a long axis passing through the center of the first positive electrode active material particle, $r_a$ is a length of a short axis passing through the center of the first positive electrode active material particle, and $r_c$ is a diameter of a circle having the same area as the area of the first positive electrode active material.

**Description**

**TECHNICAL FIELD**

Cross-reference to Related Applications

This application claims the benefit of Korean Patent Application No. 10-2023-0169313, filed on November 29, 2023, and Korean Patent Application No. 10-2024-0166750, filed on November 20, 2024, the contents disclosed in the relevant Korean patent application documents are incorporated as part of this specification.

Technical Field

The present invention relates to a positive electrode material, a method for preparing the same, and a positive electrode and a lithium secondary battery comprising the same, and more particularly, to a positive electrode material obtained by mixing a first positive electrode active material in which the average aspect ratio and average compactness of secondary particles are controlled to have specific values, and a second positive electrode active material having a different average particle diameter $(D_{50})$ from the first positive electrode active material, a method for preparing the same, a positive electrode comprising the positive electrode material and a lithium secondary battery comprising the positive electrode.

**BACKGROUND ART**

Lithium secondary batteries are generally composed of a positive electrode, a negative electrode, a separator, and an electrolyte, and the positive electrode and negative electrode include active materials capable of intercalation and deintercalation of lithium ions.

Lithium cobalt oxide ($LiCoO_2$), lithium nickel oxide ($LiNiO_2$), lithium manganese oxide ($LiMnO_2$, $LiMnO_4$ or the like), and lithium iron phosphate compound ($LiFePO_4$) have been used as positive electrode materials for lithium secondary batteries. Among them, lithium cobalt oxide has the advantages of high operating voltage and excellent capacity characteristics, but the price of cobalt as a raw material is high and the supply is unstable, making the commercial application to large-capacity batteries difficult. Lithium nickel oxide has poor structural stability, making the achievement of sufficient life characteristics difficult. Meanwhile, lithium manganese oxide has excellent stability but has the problem of poor capacity characteristics. Accordingly, lithium composite transition metal oxides containing two or more transition metals have been developed to complement the problems of lithium transition metal oxides containing Ni, Co, or Mn solely, and among them, lithium nickel cobalt manganese-based oxides containing Ni, Co, and Mn are widely used in the field of electric vehicle batteries.

Meanwhile, a positive electrode material composed of lithium nickel cobalt manganese-based oxide continuously causes side reactions from the interface with an electrolyte during charging and discharging processes, which generates oxidizing gas. The gas thus generated causes problems such as swelling and gas traps in the battery, which reduces the high-temperature storage performance of the battery.

Therefore, the development of a positive electrode material capable of reducing the amount of gas generated from the lithium nickel cobalt manganese-based oxide is required.

**DISCLOSURE OF THE INVENTION**

**TECHNICAL PROBLEM**

The present invention is intended to solve the above problems, and provides a positive electrode material which is obtained by mixing a first positive electrode active material that controls the particle shape to reduce gas generation and thus has superior life characteristics compared to the conventional positive electrode materials, and a second positive electrode active material having a different average particle diameter $(D_{50})$ from the first positive electrode active material, a method for preparing the same, a positive electrode including the positive electrode material, and a lithium secondary battery including the positive electrode.

**TECHNICAL SOLUTION**

[1] The present invention provides a positive electrode material comprising a first positive electrode active material having a secondary particle form in which a plurality of primary particles are aggregated, comprising nickel, cobalt and manganese, containing nickel in an amount of 70 mol% or more among total metals, and having a first average particle diameter ($D_{50}$), and a second positive electrode active material having a second average particle diameter ($D_{50}$) different from the first average particle diameter ($D_{50}$), wherein the first positive electrode active material has an average aspect ratio, which is an arithmetic mean value of an aspect ratio defined by Equation 1 below, of 0.86 to 0.94, and an average compactness, which is an arithmetic mean value of a compactness defined by Equation 2 below, of 0.89 to 0.96.

$$[Equation\ 1]$$

$$Aspect\ ratio\ =\ r_a/R$$

$$[Equation\ 2]$$

$$Compactness\ =\ r_c/R$$

In Equations 1 and 2, R is a length of a long axis passing through the center of the first positive electrode active material particle, $r_a$ is a length of a short axis passing through the center of the first positive electrode active material particle, and $r_c$ is a diameter of a circle having the same area as the area of the first positive electrode active material.

[2] The present invention provides the positive electrode material according to [1], wherein the first positive electrode active material has an average roundness, which is an arithmetic mean value of a roundness defined by Equation 3 below, of 0.79 to 0.88.

$$[Equation\ 3]$$

$$Roundness\ =\ [(4\ x\ Area)/(\pi\ x\ R^2)]$$

In Equation 3, R is the length of the long axis passing through the center of the first positive electrode active material particle, and Area is an actual area of the first positive electrode active material particle.

[3] The present invention provides the positive electrode material according to [1] or [2], wherein the first positive electrode active material has a composition represented by Formula 1 below.

[Formula 1]    $Li_{x1}Ni_{a1}Co_{b1}Mn_{c1}M^1_{d1}O_2$

In Formula 1, $M^1$ may be one or more selected from the group consisting of Al, B, Co, W, Mg, V, Ti, Zn, Ga, In, Ru, Nb, Sn, Sr, and Zr, $1 \leq x1 \leq 1.1$, $0.6 \leq a1 \leq 1.0$, $0 \leq b1 \leq 0.3$, $0 \leq c1 \leq 0.3$, and $0 \leq d1 < 0.15$.

[4] The present invention provides the positive electrode material according to at least one of [1] to [3], wherein the average aspect ratio of the first positive electrode active material is 0.90 to 0.94.

[5] The present invention provides the positive electrode material according to at least one of [1] to [4], wherein the average compactness of the first positive electrode active material is 0.90 to 0.95.

[6] The present invention provides the positive electrode material according to at least one of [1] to [5], wherein the average roundness of the first positive electrode active material is 0.82 to 0.88.

[7] The present invention provides the positive electrode material according to at least one of [1] to [6], wherein the first average particle diameter ($D_{50}$) of the first positive electrode active material is 8 μm to 20 μm.

[8] The present invention provides the positive electrode material according to at least one of [1] to [7], wherein the second average particle diameter ($D_{50}$) of the second positive electrode active material is 2 μm to 8 μm.

[9] The present invention provides the positive electrode material according to at least one of [1] to [8], wherein a ratio of the first average particle diameter ($D_{50}$) of the first positive electrode active material and the second average particle diameter ($D_{50}$) of the second positive electrode active material is 2:1 to 8:1.

[10] The present invention provides the positive electrode material according to at least one of [1] to [9], wherein a weight ratio of the first positive electrode active material and the second positive electrode active material is 50:50 to 90:10.

[11] The present invention provides the positive electrode material according to at least one of [1] to [10], wherein the second positive electrode active material has a composition represented by Formula 2 below.

[Formula 2]         $Li_{x2}Ni_{a2}Co_{b2}Mn_{c2}M^2_{d2}O_2$

In Formula 2, $M^2$ may be one or more selected from the group consisting of Al, B, Co, W, Mg, V, Ti, Zn, Ga, In, Ru, Nb, Sn, Sr, and Zr, $1 \leq x2 \leq 1.1$, $0.6 \leq a2 \leq 1.0$, $0 \leq b2 \leq 0.3$, $0 \leq c2 \leq 0.3$, and $0 \leq d2 < 0.15$.

[12] The present invention provides a method for preparing a positive electrode material, comprising a step of introducing a transition metal aqueous solution, a basic compound, and an ammonium cation complex forming agent into a reactor, and mixing at a stirring speed of 900 rpm to 1100 rpm while maintaining pH in the reactor at 11 or higher to prepare a precursor for a first positive electrode active material, a step of mixing the precursor for the first positive electrode active material and a lithium raw material, and performing heat treatment at a temperature of 850°C to 1000°C to prepare a first positive electrode active material having a first average particle diameter ($D_{50}$), and a step of mixing the first positive electrode active material and a second positive electrode active material having a second average particle diameter ($D_{50}$) different from the first average particle diameter ($D50$), wherein the first positive electrode active material has a secondary particle form, in which a plurality of primary particles are aggregated, comprises nickel, cobalt, and manganese, and contains nickel in an amount of 70 mol% or more among total metals, and the first positive electrode active material has an average aspect ratio, which is an arithmetic mean value of an aspect ratio defined by Equation 1 below, of 0.86 to 0.94, and an average compactness, which is an arithmetic mean value of a compactness defined by Equation 2 below, of 0.89 to 0.96.

$$[Equation\ 1]$$

$$Aspect\ ratio\ =\ r_a/R$$

$$[Equation\ 2]$$

$$Compactness\ =\ r_c/R$$

In Equations 1 and 2, R is a length of a long axis passing through the center of the first positive electrode active material particle, $r_a$ is a length of the short axis passing through the center of the first positive electrode active material particle, and $r_c$ is a diameter of a circle having the same area as the area of the first positive electrode active material.

[13] The method for preparing a positive electrode material according to [12], wherein the first positive electrode active material has an average roundness, which is an arithmetic mean value of a roundness defined by Equation 3 below, of 0.79 to 0.88.

$$[Equation\ 3]$$

$$Roundness\ =\ [(4\ x\ Area)/(\pi\ x\ R^2)]$$

In Equation 3, R is the length of the long axis passing through the center of the first positive electrode active material particle, and Area is an actual area of the first positive electrode active material particle.

[14] The present invention provides a positive electrode comprising the positive electrode material of at least one of [1] to [11].

[15] The present invention provides a lithium secondary battery comprising the positive electrode according to [14], a negative electrode, a separator disposed between the positive electrode and the negative electrode, and an electrolyte.

## ADVANTAGEOUS EFFECTS

The positive electrode active material according to the present invention has an average aspect ratio of 0.86 to 0.94 and an average compactness of 0.89 to 0.96, so that the contact area with an electrolyte is minimized, and gas generation due to side reactions with the electrolyte is little.

In addition, the positive electrode material according to the present invention may improve the life characteristics by mixing the positive electrode active material and another positive electrode active material having a different average particle diameter ($D_{50}$) from the positive electrode active material.

The effects according to the present invention are not limited to the contents illustrated above, and more diverse effects are included in this specification.

## BEST MODE FOR CARRYING OUT THE INVENTION

Hereinafter, the present invention will be explained in more detail.

It will be understood that words or terms used in the specification and claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The terms used in this specification are for the purpose of describing embodiments and are not intended to limit the present invention. In this specification, a singular form includes a plural form unless specifically stated otherwise. The terms "comprises" and/or "comprising" as used in the specification do not exclude the presence or addition of one or more other components in addition to the components mentioned.

In the present invention, the primary particle means a particle unit that does not have a grain boundary when observed at a magnification of 5,000 to 20,000 times using a scanning electron microscope.

In the present invention, the secondary particle means a particle formed by aggregation of tens to hundreds of primary particles. More specifically, the secondary particle is an aggregate of 50 or more primary particles.

In the present invention, the average aspect ratio is an arithmetic mean value of an aspect ratio, and the aspect ratio is the ratio of the length of the short axis passing through the center of the positive electrode active material particle to the length of the long axis passing through the center of the positive electrode active material particle.

In the present invention, the average compactness is an arithmetic mean value of a compactness, and the compactness is the ratio of the diameter of a circle having the same area as the area of the positive electrode active material to the length of the long axis passing through the center of the positive electrode active material particle.

In the present invention, the average roundness is the arithmetic mean of a roundness, and the roundness is the ratio of the actual area of the positive electrode active material to the area of a circle whose diameter is the long axis passing through the center of the positive electrode active material particles.

In the present invention, the average aspect ratio and the average roundness may be measured by photographing a positive electrode active material at 800 times magnification using a scanning electron microscope (SEM, Hitachi S-4800), obtaining about 300 particle images, and deriving the aspect ratio and the roundness through an image analysis program such as Image J for the scanning electron microscope images, and then calculating the average.

In the present invention, the average compactness may be measured by photographing the positive electrode active material at 2000 times magnification using a scanning electron microscope (SEM, Hitachi S-4800), obtaining about 100 images, deriving the compactness from the scanning electron microscope images using an image analysis program such as Image J, and then calculating the average.

In the present invention, the average particle diameter ($D_{50}$) refers to the particle diameter at the 50% point of the volume cumulative distribution according to particle diameter. The average particle diameter ($D_{50}$) may be measured by dispersing a target powder (for example, positive electrode active material) in a dispersion medium, introducing same into a commercially available laser diffraction particle size measuring device (for example, Microtrac S3500), transmitting a laser beam, measuring the difference in diffraction patterns according to particle size, calculating the particle diameter at a point where the volume cumulative distribution according to particle diameter becomes 50%.

## Positive Electrode Material

First, the positive electrode material according to the present invention will be described.

The positive electrode material according to the present invention includes a first positive electrode active material having a first average particle diameter ($D_{50}$), which has a secondary particle form in which a plurality of primary particles are aggregated, includes nickel, cobalt, and manganese, contains nickel in an amount of 70 mol% or more among the total metals, satisfies an average aspect ratio, an average compactness, and an average roundness in specific value ranges, and a second positive electrode active material having a second average particle diameter ($D_{50}$) different from the first average particle diameter ($D_{50}$).

The positive electrode material may have bimodal particle size distribution in which the average particle diameter ($D_{50}$) of the first positive electrode active material is larger than the average particle diameter ($D_{50}$) of the second positive electrode active material. If the positive electrode material has bimodal particle size distribution, a high electrode density may be achieved, and thus, battery capacity characteristics may be improved. In the case of the second positive electrode active material, if the average particle diameter ($D_{50}$) increases, a lithium diffusion path within the particle becomes longer, and resistance and output characteristics may be deteriorated. Therefore, it is preferable to achieve a high electrode density while minimizing the deterioration of the resistance and output characteristics by making the average particle diameter ($D_{50}$) of the first positive electrode active material in the secondary particle form larger than the average particle diameter ($D_{50}$) of the second positive electrode active material.

Specifically, the average particle diameter ($D_{50}$) of the first positive electrode active material may be 8 μm to 20 μm, preferably 8 μm to 17 μm, more preferably, 9 μm to 15 μm, and the average particle diameter ($D_{50}$) of the second positive electrode active material may be 2 μm to 8 μm, preferably 2 μm to 7 μm, more preferably 2 μm to 6 μm. If the average particle diameter ($D_{50}$) of the first positive electrode active material and the second positive electrode active material is too small, slurry agglomeration occurs to make electrode manufacturing difficult, electrolyte impregnation becomes poor, and electrochemical properties are deteriorated. If the average particle diameter ($D_{50}$) is too large, resistance increases and output characteristics deteriorate. If the average particle diameter ($D_{50}$) of the first positive electrode active material and the second positive electrode active material satisfies the above range, capacity characteristics, resistance characteristics, and output characteristics are more excellent.

In addition, the average particle diameter ($D_{50}$) ratio of the first positive electrode active material and the second positive electrode active material may be 2:1 to 8:1, more preferably 2:1 to 6:1, and even more preferably 2:1 to 4:1. If the average particle diameter ($D_{50}$) ratio of the first positive electrode active material and the second positive electrode active material satisfies the above range, the gap between the positive electrode active material particles may be more effectively reduced, the packing density may be increased, the pressure applied according to the particle size may be optimized to reduce particle breakage during rolling, and the capacity per positive electrode volume may be effectively improved.

Meanwhile, the first positive electrode active material and the second positive electrode active material may be mixed at a weight ratio of 50:50 to 90:10, preferably 60:40 to 90:10, and more preferably 60:40 to 80:20. By mixing and using the first positive electrode active material which is a large particle, and the second positive electrode active material, which is a small particle, within the above range, the energy density of the positive electrode may be increased, the pressure applied according to the particle size may be optimized to reduce particle breakage during rolling, high capacity and excellent thermal stability may be secured, and side reactions with an electrolyte may be suppressed.

Next, the first positive electrode active material and the second positive electrode active material, constituting the positive electrode material of the present invention will be described in more detail.

**(1) First Positive Electrode Active Material**

The first positive electrode active material is a lithium composite transition metal oxide containing nickel, cobalt, and manganese, that is, an NCM-based lithium composite transition metal oxide. The lithium composite transition metal oxide may have a nickel content of 70 mol% or more among the total metals, and more preferably, 80 mol% or more. By satisfying the nickel content among the total transition metal content of the lithium composite transition metal oxide of 70 mol% or more, high capacity may be secured.

Specifically, the first positive electrode active material may include lithium composite transition metal oxide particles represented by Formula 1 below.

$$[\text{Formula 1}] \qquad Li_{x1}Ni_{a1}Co_{b1}Mn_{c1}M^1{}_{d1}O_2$$

In Formula 1, $M^1$ may be one or more selected from the group consisting of Al, B, Co, W, Mg, V, Ti, Zn, Ga, In, Ru, Nb, Sn, Sr, and Zr. $M^1$ is not necessarily included, but if included in an appropriate amount, $M^1$ may play a role in improving the crystal structure stability during calcining.

Meanwhile, x1 represents the molar ratio of lithium in the lithium composite transition metal oxide particles, and may be $1.0 \leq x1 \leq 1.1$, preferably $1.00 \leq x1 \leq 1.09$, more preferably $1.00 \leq x1 \leq 1.07$. If the molar ratio of lithium satisfies the range, the crystal structure of the lithium composite transition metal oxide particles may be stably formed.

a1 represents the molar ratio of nickel among the total metals excluding lithium in the lithium composite transition metal oxide particles, and may be $0.6 \leq a1 \leq 1.0$, preferably $0.65 \leq a1 \leq 1.0$, more preferably $0.7 \leq a1 \leq 1.0$. If the molar ratio of nickel satisfies the range, high energy density is exhibited, and high capacity may be achieved.

b1 represents the molar ratio of cobalt among the total metals excluding lithium in the lithium composite transition metal oxide particles, and may be $0 \leq b1 \leq 0.3$, preferably $0 \leq b1 \leq 0.25$, and more preferably $0 \leq b1 \leq 0.2$. If the molar ratio of cobalt satisfies the range, good resistance characteristics and output characteristics may be achieved.

c1 represents the molar ratio of manganese among the total metals excluding lithium in the lithium composite transition metal oxide particles, and may be $0 \leq c1 \leq 0.3$, preferably $0 \leq c1 \leq 0.25$, and more preferably $0 \leq c1 \leq 0.2$. If the molar ratio of manganese satisfies the range, the structural stability of the positive electrode active material may be excellent.

d1 represents the molar ratio of $M^1$ among the total metals excluding lithium in the lithium composite transition metal oxide particles, and may be $0 \leq d1 \leq 0.15$, preferably $0 \leq d1 \leq 0.1$, and more preferably $0 \leq d1 \leq 0.07$. If the molar ratio of $M^1$ satisfies the range, the structural stability of the positive electrode active material may be excellent.

The average aspect ratio of the first positive electrode active material may be 0.86 to 0.94, preferably 0.90 to 0.94, more preferably 0.93 to 0.94. If the average aspect ratio of the first positive electrode active material is less than 0.86, the contact between particles may be poor, which may result in reduced lithium mobility, and if the average aspect ratio is greater than 0.94, the diffusion distance of lithium ions within the particles may increase to result in reduced electrochemical performance, and the distance between particles may become longer to hinder lithium ion diffusion within the electrode.

The average compactness of the first positive electrode active material may be 0.89 to 0.96, preferably 0.90 to 0.95, more preferably 0.91 to 0.94. If the average compactness of the first positive electrode active material is less than 0.89, the contact between particles is poor, resulting in reduced lithium mobility and increased particle breakage during the rolling process. If the compactness exceeds 0.96, the contact between particles may be favorable, but the size of fine particles generated when particle breakage occurs is small, which may ultimately aggravate particle breakage.

Specifically, the first positive electrode active material according to the present invention is characterized by satisfying both the range of the average aspect ratio and the range of the average compactness.

Even if the average aspect ratio of the first positive electrode active material satisfies a value of 0.86 to 0.94, if the average compactness is less than 0.89, the shape of the first positive electrode active material becomes irregular and structurally loose, so that fine particles are separated and fall off during applying an external pressure or charge and discharge processes to generate fine particles, which may deteriorate the performance of the electrode. In addition, the electrolyte may excessively penetrate into the empty space in the positive electrode material, which may promote side reactions and increase the amount of gas generation. In addition, even if the average aspect ratio of the first positive electrode active material satisfies a value of 0.86 to 0.94, if the average compactness exceeds 0.96, the bonding between the primary particles is too tight, so that particles may easily break due to friction therebetween during the charge and discharge processes, thereby generating fine particles, and since the average compactness is too high, the electrolyte may not penetrate uniformly, so that some particles may react excessively with the electrolyte, thereby increasing the amount of gas generated inside the electrode.

In addition, even if the average compactness of the first positive electrode active material satisfies a value of 0.89 to 0.96, if the average aspect ratio is less than 0.86, it means that the first positive electrode active material is flat or irregular, and in this case, there is a problem that the first positive electrode active material is sensitive to pressure and easily breaks during the charge and discharge cycle, thereby generating fine particles. In addition, even if the average compactness of the first positive electrode active material satisfies a value of 0.89 to 0.96, if the average aspect ratio exceeds 0.94, it means that the positive electrode active material is excessively spherical, and in this case, the empty space in the first positive electrode active material becomes relatively large, so that the compactness within the electrode decreases, and electrolyte decomposition may be promoted only in some parts during charge and discharge. Therefore, the generation amount of internal gas may be increased, which causes a problem of shortening the lifespan of the battery.

The average roundness of the first positive electrode active material may be 0.79 to 0.88, preferably 0.82 to 0.88, and more preferably 0.86 to 0.88. If the average roundness of the first positive electrode active material satisfies the range, lithium ions may diffuse more smoothly into the particles, and the contact area between the first positive electrode active material and the electrolyte increases, so that the electrochemical performance may be improved. In addition, since the distance between particles within the electrode is maintained relatively constant, the flow of current within the electrode is smooth, and particle arrangement is uniform, and mechanical stability is increased, thereby improving the cycle lifespan of the battery. If the average roundness of the first positive electrode active material is less than 0.79, friction between single particles increases, and at the same time, the distribution of the first positive electrode active material within the electrode becomes uneven, which may reduce the capacity and life characteristics of the battery, and if the average roundness exceeds 0.88, there is a problem that the generation amount of fine particles during rolling may increase.

## (2) Second Positive Electrode Active Material

The second positive electrode active material may have a composition that is the same as or different from the first positive electrode active material. For example, the second positive electrode active material may include a lithium transition metal oxide represented by Formula 2 below.

$$[\text{Formula 2}] \qquad Li_{x2}Ni_{a2}Co_{b2}Mn_{c2}M^2_{d2}O_2$$

In Formula 2, $M^2$ may be one or more selected from the group consisting of Al, B, Co, W, Mg, V, Ti, Zn, Ga, In, Ru, Nb, Sn, Sr, and Zr. $M^2$ is not necessarily included, but if included in an appropriate amount, $M^2$ may play a role in improving crystal structure stability during calcining.

Meanwhile, $x2$ represents the molar ratio of lithium in the lithium composite transition metal oxide particles, and may be $1.0 \leq x2 \leq 1.1$, preferably $1.00 \leq x2 \leq 1.09$, more preferably $1.00 \leq x2 \leq 1.07$. If the molar ratio of lithium satisfies the range, the crystal structure of the lithium composite transition metal oxide particles may be stably formed.

$a2$ represents the molar ratio of nickel among the total metals excluding lithium in the lithium composite transition metal oxide particles, and may be 0.6≤a2≤1.0, preferably 0.65≤a2≤1.0, more preferably 0.7≤a2≤1.0. If the molar ratio of nickel satisfies the range, high energy density is exhibited, enabling high capacity achievement.

b2 represents the molar ratio of cobalt among the total metals excluding lithium in the lithium composite transition metal oxide particles, and may be 0≤b2≤0.3, preferably 0≤b2≤0.25, more preferably 0≤b2≤0.2. If the molar ratio of cobalt satisfies the range, good resistance characteristics and output characteristics may be achieved.

c2 represents the molar ratio of manganese among the total metals excluding lithium in the lithium composite transition metal oxide particles, and may be 0≤c2≤0.3, preferably 0≤c2≤0.25, and more preferably 0≤c2≤0.2. If the molar ratio of manganese satisfies the range, the structural stability of the positive electrode active material may be excellent.

d2 represents the molar ratio of $M^2$ among the total metals excluding lithium in the lithium composite transition metal oxide particles, and may be 0≤d2≤0.15, preferably 0≤d2≤0.1, and more preferably 0≤d2≤0.07. If the molar ratio of $M^2$ satisfies the range, the structural stability of the positive electrode active material may be excellent.

**Method for Preparing Positive Electrode Material**

Next, a method for preparing a positive electrode material according to the present invention will be described. The positive electrode material according to the present invention is prepared by mixing the first positive electrode active material and the second positive electrode active material having a second average particle diameter ($D_{50}$) different from the first average particle diameter ($D_{50}$).

Specifically, the first positive electrode active material is prepared by a step of introducing a transition metal aqueous solution, a basic compound, and an ammonium cation complex forming agent into a reactor, and mixing at a stirring speed of 900 rpm to 1100 rpm while maintaining the pH in the reactor at 11 or higher to prepare a precursor for the first positive electrode active material, and then a step of mixing the precursor for the first positive electrode active material and a lithium raw material and performing a heat treatment at a temperature of 850°C to 1000°C.

The transition metal aqueous solution may be prepared by dissolving the transition metal raw material in a solvent such as water, and for example, may be prepared by dissolving a nickel raw material, a cobalt raw material, and a manganese raw material in water.

Meanwhile, the transition metal raw material may be an acetate, carbonate, nitrate, sulfate, halide, sulfide, or oxide of a transition metal.

Specifically, the nickel raw material may be, for example, $NiO$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, nickel halide, or a combination thereof, but is not limited thereto.

The cobalt raw material may be, for example, $CoSO_4$, $Co(OCOCH_3)_2 \cdot 4H_2O$, $Co(NO_3)_2 \cdot 6H_2O$, $CoSO_4 \cdot 7H_2O$, or a combination thereof, but is not limited thereto.

The manganese raw material may be, for example, $Mn_2O_3$, $MnO_2$, $Mn_3O_4$ $MnCO_3$, $Mn(NO_3)_2$, $MnSO_4 \cdot H_2O$, manganese acetate, manganese halide, or a combination thereof, but is not limited thereto.

The basic compound may be at least one compound selected from the group consisting of $NaOH$, $KOH$, and $Ca(OH)_2$, and may be introduced into a reactor in the form of a solution in which the compound is dissolved in a solvent. In this case, water or a mixture of water and an organic solvent (specifically, alcohol or the like) that may be uniformly mixed with water may be used as the solvent.

The ammonium cation complex forming agent may include at least one compound selected from the group consisting of $NH_4OH$, $(NH_4)_2SO_4$, $NH_4NO_3$, $NH_4Cl$, $CH_3COONH_4$, and $NH_4CO_3$, and may be introduced into a reactor in the form of a solution in which the compound is dissolved in a solvent. In this case, as the solvent, water or a mixture of water and an organic solvent (specifically, alcohol or the like) that may be uniformly mixed with water may be used.

In addition, the concentration of the ammonium cation complex is preferably 9000 ppm or more based on the total weight of the precursor for the first positive electrode active material. The more ammonium cation complex is added, the more the BET specific surface area of the precursor increases, and as a result, the primary particles of the positive electrode material may become smaller during calcining, and if the primary particles become smaller, the compactness tends to increase.

In this case, the transition metal aqueous solution, the basic compound, and the ammonium cation complex forming agent are added in amounts such that the pH of the reaction solution becomes a desired range.

In the present invention, the pH in the reactor is maintained at 11 or more. If the pH range is satisfied, the particle size decreases during precursor synthesis, and if grown to the same size, the aspect ratio and roundness tend to improve.

In addition, mixing is performed in the reactor at a stirring speed of 900 rpm to 1100 rpm. If mixed at a stirring speed of less than 900 rpm, the mixing may not be uniformly performed, so the average aspect ratio and average compactness of the final first positive electrode active material are low, and there are problems of easy breaking and generating fine powder during charge and discharge cycle processes. If mixed at a stirring speed exceeding 1100 rpm, empty space in the final first positive electrode active material becomes large, so that the electrolyte does not react uniformly, which may increase the generation amount of internal gas.

If the transition metal aqueous solution, basic compound, and ammonium cation complex forming agent are added to the reactor and stirred as described above, the transition metals in the transition metal aqueous solution are coprecipitated to produce a precursor for the first positive electrode active material in the form of a transition metal hydroxide.

The precursor for the first positive electrode active material prepared above and a lithium raw material are mixed by heating at a temperature of 850°C to 1000°C, preferably 850°C to 950°C, and more preferably 870°C to 930°C. The first positive electrode active material according to the present invention has a nickel (Ni) content of 70 mol% or more, so if heated at a temperature below 850°C, the crystal structure of the active material is not sufficiently stabilized, so that oxygen vacancies inside increase, causing oxygen to be released and reacting with the electrolyte to generate gas. In addition, if heated at a temperature exceeding 1000°C, the particles grow excessively to reduce the specific surface area, which leads to a decrease in the reaction area with the electrolyte, resulting in a problem of reducing lifespan characteristics.

In addition, the heating may be performed for 10 to 24 hours, preferably 12 to 20 hours, and more preferably 15 to 20 hours.

In addition, the heating may be performed in an oxygen atmosphere. In the present specification, an oxygen atmosphere means an atmosphere including oxygen sufficient for calcining, including an air atmosphere. In particular, it is preferable to perform the heat treatment in an atmosphere having a higher oxygen partial pressure than an air atmosphere.

If calcining is performed under the above conditions, a first positive electrode active material having excellent electrochemical properties may be formed.

As the lithium raw material, lithium-containing sulfate, nitrate, acetate, carbonate, oxalate, citrate, halide, hydroxide or oxyhydroxide may be used, and for example, $LiOH$, $Li_2CO_3$, $LiNO_3$, $LiNO_2$, $LiOH \cdot H_2O$, $LiH$, $LiF$, $LiCl$, $LiBr$, $LiI$, $CH_3COOLi$, $Li_2O$, $Li_2SO_4$, $Li_3C_6H_5O_7$ or a mixture thereof may be used.

The precursor for the first positive electrode active material and the lithium raw material may be mixed so that the molar ratio of Li: (Ni+Co+Mn) is 1:1 to 1.1:1, preferably 1.01:1 to 1.09:1, more preferably 1.03:1 to 1.07:1. If the range is satisfied, the layered crystal structure of the positive electrode active material is well developed, and a positive electrode active material with excellent electrochemical performance may be prepared.

The first positive electrode active material and the second positive electrode active material may be mixed in a weight ratio of 50:50 to 90:10. By mixing and using the first positive electrode active material, which is a large particle, and the second positive electrode active material, which is a small particle, within the above range, the energy density of the positive electrode may be increased, the pressure applied according to the particle size may be optimized to reduce particle breakage during rolling, and high capacity and excellent thermal stability may be secured, and side reactions with an electrolyte may be suppressed.

**Positive Electrode**

Next, the positive electrode according to the present invention will be described.

The positive electrode according to the present invention includes the positive electrode material.

The positive electrode includes a positive electrode current collector, and a positive electrode active material layer provided on at least one surface of the positive electrode current collector, and the positive electrode active material layer includes the positive electrode material. Since the positive electrode material is the same as described above, a detailed description will be omitted, and only the remaining components will be described in detail below.

The positive electrode current collector is not particularly limited as long as it has conductivity and does not cause a chemical change in the battery, and for example, stainless steel, aluminum, nickel, titanium, calcined carbon, or aluminum or stainless steel, surface-treated with carbon, nickel, titanium, silver or the like may be used. In addition, the positive electrode current collector may typically have a thickness of 3 $\mu$m to 500 $\mu$m, and fine unevenness may be formed on the surface of the current collector to increase the adhesive strength of the positive electrode active material. For example, the positive electrode current collector may be used in various forms such as a film, a sheet, a foil, a net, a porous body, a foam, and a non-woven fabric.

The positive electrode active material layer may include a conductive material and a binder together with the positive electrode material according to the present invention described above.

The positive electrode material may be included in an amount of 80 wt% to 99 wt%, more specifically 85 wt% to 99 wt%, based on the total weight of the positive electrode active material layer. If included in the above-described amount range, excellent capacity characteristics may be exhibited.

The conductive material is used to provide the electrode with conductivity, and may be used without special restrictions as long as it does not cause a chemical change in the battery to be configured and has electronic conductivity. Specific examples include: graphite such as natural graphite or artificial graphite; carbon-based materials such as carbon black, acetylene black, Ketjen black, channel black, furnace black, lamp black, thermal black, and carbon fiber; metal powder or metal fiber of copper, nickel, aluminum, silver or the like; conductive whiskers of zinc oxide, potassium titanate or the like; conductive metal oxides such as titanium oxide; or conductive polymers such as polyphenylene derivatives, and one of them alone or a mixture of two or more of thereof may be used. The conductive material may be included in 1 to 30 wt% based on the total weight of the positive electrode active material layer.

The binder plays a role in improving the adhesion between positive electrode particles and the adhesive strength between the positive electrode material and the current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene polymer (EPDM), sulfonated-EPDM, styrene butadiene rubber (SBR), fluororubber, or various copolymers thereof, and one of them alone or a mixture of two or more thereof may be used. The binder may be included in 1 to 30 wt% based on the total weight of the positive electrode active material layer.

The positive electrode may be manufactured according to the conventional positive electrode manufacturing method, except for using the positive electrode material according to the present invention. Specifically, a positive electrode composite material prepared by dissolving or dispersing the positive electrode material and, optionally, a binder and a conductive material in a solvent is applied onto a positive electrode current collector, followed by drying and rolling, or the positive electrode composite material is cast onto a separate support, and then a film obtained by peeling off from the support is laminated onto a positive electrode current collector.

The solvent may be a solvent generally used in the relevant technical field, and may include dimethyl sulfoxide (DMSO), isopropyl alcohol, N-methylpyrrolidone (NMP), acetone, or water, and one of them alone or a mixture of two or more thereof may be used. The amount of the solvent used is sufficient to have a viscosity that may dissolve or disperse the positive electrode active material or the positive electrode material, the conductive material, and the binder in consideration of the coating thickness of a slurry and the manufacturing yield, and exhibit excellent thickness uniformity when applying for the manufacture of a positive electrode thereafter.

**Lithium Secondary Battery**

Next, a lithium secondary battery according to the present invention will be described.

The lithium secondary battery specifically includes the positive electrode, a negative electrode positioned opposite the positive electrode, and a separator and electrolyte interposed between the positive electrode and the negative electrode. Since the positive electrode is the same as described above, the detailed description thereof will be omitted, and only the remaining components will be specifically described below.

In addition, the lithium secondary battery may optionally further include a battery case that accommodates the electrode assembly of the positive electrode, the negative electrode, and the separator, and a sealing member that seals the battery case.

**(1) Negative Electrode**

In the lithium secondary battery, the negative electrode includes a negative electrode current collector and a negative electrode active material layer positioned on the negative electrode current collector.

The negative electrode current collector is not particularly limited as long as it has high conductivity without causing chemical changes in the battery, and for example, copper, stainless steel, aluminum, nickel, titanium, calcined carbon, copper or stainless steel, surface-treated with carbon, nickel, titanium, silver or the like, an aluminum-cadmium alloy or the like may be used. In addition, the negative electrode current collector may typically have a thickness of 3 $\mu$m to 500 $\mu$m, and, like the positive electrode current collector, may form fine unevenness on the surface of the current collector to strengthen the bonding strength of the negative electrode active material. For example, the negative electrode current collector may be used in various forms such as a film, a sheet, a foil, a net, a porous body, a foam, and a non-woven fabric.

The negative electrode active material layer optionally includes a binder and a conductive material together with the negative electrode active material.

A compound capable of reversible intercalation and deintercalation of lithium may be used as the negative electrode active material. Specific examples include carbonaceous materials such as artificial graphite, natural graphite, graphitized carbon fiber, and amorphous carbon; metallic compounds capable of alloying with lithium such as Si, Al, Sn, Pb, Zn, Bi, In, Mg, Ga, Cd, Si alloy, Sn alloy, and Al alloy; metal oxides capable of doping and dedoping lithium, such as SiO$_\beta$ (0<$\beta$<2), SnO$_2$, vanadium oxide and lithium vanadium oxide; or composites including the metallic compounds and carbonaceous materials, such as a Si-C composite and Sn-C composite, and one or a mixture of two or more thereof may be used. In addition, a metallic lithium thin film may be used as the negative electrode active material. In addition, both low-crystalline carbon and high-crystalline carbon may be used as the carbon material. Representative examples of low-crystalline carbon include soft carbon and hard carbon, and representative examples of high-crystalline carbon include amorphous, plate-like, flaky, spherical or fiber-like natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included in an amount of 80 wt% to 99 wt% based on the total weight of the negative electrode active material layer.

The binder is a component that assists in the bonding between the conductive material, the active material, and the current collector, and is typically added in an amount of 0.1 wt% to 10 wt% based on the total weight of the negative electrode active material layer. Examples of the binder include polyvinylidene fluoride (PVDF), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene polymer (EPDM), sulfonated-EPDM, styrenebutadiene rubber, nitrile-butadiene rubber, fluororubber, and various copolymers thereof.

The conductive material is a component for further improving the conductivity of the negative electrode active material, and may be added in an amount of 10 wt% or less, preferably 5 wt% or less, based on the total weight of the negative electrode active material layer. The conductive material is not particularly limited as long as it has conductivity without causing chemical changes in the battery, and examples thereof include graphite such as natural graphite and artificial graphite; carbon black such as acetylene black, Ketjen black, channel black, furnace black, lamp black, and thermal black; conductive fibers such as carbon fibers and metal fibers; fluorinated carbon; metal powders such as aluminum or nickel powder; conductive whiskers of zinc oxide or potassium titanate; conductive metal oxides such as titanium oxide; conductive materials such as polyphenylene derivatives.

The negative electrode may be manufactured, for example, by applying a negative electrode composite prepared by dissolving or dispersing a negative electrode active material and optionally a binder and a conductive material in a solvent on a negative electrode current collector and drying, or by casting the negative electrode composite on a separate support and then laminating a film obtained by peeling off from the support on a negative electrode current collector.

### (2) Separator

In the lithium secondary battery, the separator separates the negative electrode and the positive electrode and provides a passage for lithium ions to move, and the separator may use without any special restrictions as long as it is usually used in lithium secondary batteries, and in particular, a separator having low resistance to ion movement of the electrolyte and excellent electrolyte moisture retention ability is preferably. Specifically, a porous polymer film, for example, a porous polymer film made of a polyolefin polymer, such as an ethylene homopolymer, a propylene homopolymer, an ethylene/butene copolymer, an ethylene/hexene copolymer, and an ethylene/methacrylate copolymer, or a laminated structure of two or more layers thereof, may be used. In addition, a common porous nonwoven fabric, for example, a nonwoven fabric made of high-melting-point glass fiber, polyethylene terephthalate fiber or the like may be used. In addition, a coated separator containing a ceramic component or a polymer material may be used to secure heat resistance or mechanical strength, and optionally, a single-layer or multilayer structure may be used.

### (3) Electrolyte

The electrolyte used in the present invention may include, but is not limited to, organic liquid electrolytes, inorganic liquid electrolytes, solid polymer electrolytes, gel-type polymer electrolytes, solid inorganic electrolytes, and molten inorganic electrolytes, that may be used in the manufacture of lithium secondary batteries.

Specifically, the electrolyte may include an organic solvent and a lithium salt.

The organic solvent may be used without particular limitation as long as it may act as a medium through which ions involved in the electrochemical reaction of the battery may move. Specifically, the organic solvent may include ester-based solvents such as methyl acetate, ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (R is a linear, branched, or cyclic hydrocarbon group having 2 to 20 carbon atoms and may include a double-bonded aromatic ring or an ether bond); amides such as dimethylformamide; dioxolanes such as 1,3-dioxolane; or sulfolanes. Among them, a carbonate-based solvent is preferable, and a mixture of a cyclic carbonate (for example, ethylene carbonate, propylene carbonate or the like) having high ionic conductivity and high dielectric constant, that may improve the charge and discharge performance of the battery and a linear carbonate-based compound (for example, ethyl methyl carbonate, dimethyl carbonate, diethyl carbonate or the like) having low viscosity is more preferable.

The lithium salt may be used without any particular limitation as long as it is a compound that may provide lithium ions used in a lithium secondary battery. Specifically, the lithium salt may use $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, or $LiB(C_2O_4)_2$. The concentration of the lithium salt is preferably used within a range of 0.1 to 2.0 M. If the concentration of the lithium salt is within the range, the electrolyte has appropriate conductivity and viscosity, so that it may exhibit excellent electrolyte performance, and lithium ions may move effectively.

In addition to the electrolyte components, the electrolyte may further include one or more additives, such as haloalkylene carbonate-based compounds such as difluoroethylene carbonate, pyridine, triethylphosphite, triethanolamine, cyclic ethers, ethylene diamine, n-glyme, hexaphosphoric acid triamide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride, for the purpose of improving the life characteristics of the battery, suppressing the decrease in battery capacity, and improving the discharge capacity of the battery. In this case, the additive may be included in an amount of 0.1 to 5 parts by weight based on 100 parts by weight of the total weight of the electrolyte.

Hereinafter, the present invention will be described in more detail referring to examples. However, the examples are intended to illustrate the present invention and the scope of the present invention is not limited thereto.

**Preparation Example 1**

$NiSO_4$, $CoSO_4$, and $MnSO_4$ were mixed in distilled water in amounts such that the molar ratio of Ni:Co:Mn was 7:1:2 to prepare a transition metal aqueous solution.

Subsequently, deionized water was added to a reactor, nitrogen gas was purged into the reactor to remove dissolved oxygen in water, and NaOH was added to maintain the pH in the reactor at 11.5.

Subsequently, a co-precipitation reaction was performed for 48 hours under the conditions of a reaction temperature of 50°C, pH 11.5, and a stirring speed of 1000 rpm, while adding a transition metal aqueous solution, a NaOH aqueous solution, and a $NH_4OH$ aqueous solution to the reactor, to prepare a precursor for a first positive electrode active material.

The precursor for the first positive electrode active material and LiOH were mixed such that the molar ratio of Li: (Ni+Co+Mn) was 1.05:1, and then calcined at 900°C for 16 hours, and then, the resultant was washed and dried to prepare a first positive electrode active material A in the form of secondary particles having a composition of $Li[Ni_{0.7}Co_{0.1}Mn_{0.2}]O_2$ and an average particle diameter ($D_{50}$) of 11 $\mu$m.

**Preparation Example 2**

A first positive electrode active material B was prepared using the same method as Preparation Example 1, except that the precursor for the positive electrode active material and LiOH were mixed and then calcined at 850°C for 15 hours.

**Preparation Example 3**

A first positive electrode active material C was prepared in the same manner as Preparation Example 1, except that a co-precipitation reaction was performed for 36 hours under the conditions of pH 10.2 and a stirring speed of 800 rpm during preparing a precursor for a positive electrode active material.

**Preparation Example 4**

A first positive electrode active material D was prepared using the same method as Preparation Example 1, except that the precursor for the positive electrode active material and LiOH were mixed and then calcined at 800°C for 12 hours.

**Preparation Example 5**

A first positive electrode active material E was prepared in the same manner as Preparation Example 1, except that a co-precipitation reaction was performed for 36 hours under the conditions of pH 10.2 and a stirring speed of 800 rpm during preparing a precursor for a positive electrode active material, and that the precursor for the positive electrode active material and LiOH were mixed and then calcined at 850°C for 12 hours.

The cross-sections of the first positive electrode active materials A to E, prepared by Preparation Examples 1 to 5 were photographed at 800 times magnification using a scanning electron microscope (SEM), and then about 300 particle images were obtained using an Image J program to obtain the aspect ratio and roundness, and then the average value thereof was calculated to measure the average aspect ratio and average roundness.

An average compactness was measured by photographing the cross-sections of the first positive electrode active materials A to E, prepared by Preparation Examples 1 to 5 at 2000 times magnification using a scanning electron microscope (SEM), and then about 100 particle images were obtained using the Image J program to obtain the compactness, and then the average value thereof was calculated to measure the average compactness.

0.1 g of each of the first positive electrode active materials A to E, prepared by Preparation Examples 1 to 5 was dispersed in a dispersion medium, and then introduced into a laser diffraction particle size measuring device (S3500 from Microtrac Co.) to transmit a laser beam and calculate the particle size distribution, and the average particle diameter ($D_{50}$) was measured by calculating the diameter of each particle at a point where the volume cumulative distribution was 50% according to the particle diameter.

The average aspect ratio, average roundness, average compactness, and average particle diameter ($D_{50}$) measured above are shown in Table 1 below.

[Table 1]

| | | Preparation Example 1 | Preparation Example 2 | Preparation Example 3 | Preparation Example 4 | Preparation Example 5 |
|---|---|---|---|---|---|---|
| Degree of spher icity | Average aspect ratio | 0.935 | 0.930 | 0.810 | 0.942 | 0.851 |
| | Average roundness | 0.861 | 0.876 | 0.751 | 0.888 | 0.785 |
| Average compactness | | 0.919 | 0.936 | 0.865 | 0.961 | 0.886 |
| Average particle diameter ($D_{50}$) [$\mu$m] | | 9.9 | 10.1 | 9.7 | 10.1 | 9.9 |

**Example 1**

A positive electrode material was prepared by mixing the first positive electrode active material A prepared by Preparation Example 1 and a second positive electrode active material Li $[Ni_{0.7}Co_{0.1}Mn_{0.2}]O_2$ having an average particle diameter ($D_{50}$) of 4 $\mu$m at a weight ratio of 7:3.

**Example 2**

A positive electrode material was prepared by mixing the first positive electrode active material B prepared by Preparation Example 2 and a second positive electrode active material Li $[Ni_{0.7}Co_{0.1}Mn_{0.2}]O_2$ having an average particle diameter ($D_{50}$) of 4 $\mu$m at a weight ratio of 7:3.

**Comparative Example 1**

A positive electrode material was prepared by mixing the first positive electrode active material C prepared by Preparation Example 3 and a second positive electrode active material Li $[Ni_{0.7}Co_{0.1}Mn_{0.2}]O_2$ having an average particle diameter ($D_{50}$) of 4 $\mu$m at a weight ratio of 7:3.

**Comparative Example 2**

A positive electrode material was prepared by mixing the first positive electrode active material D prepared by Preparation Example 4 and a second positive electrode active material Li $[Ni_{0.7}Co_{0.1}Mn_{0.2}]O_2$ having an average particle diameter ($D_{50}$) of 4 $\mu$m at a weight ratio of 7:3.

**Comparative Example 3**

A positive electrode material was prepared by mixing the first positive electrode active material E prepared by Preparation Example 5 and a second positive electrode active material Li $[Ni_{0.7}Co_{0.1}Mn_{0.2}]O_2$ having an average particle diameter ($D_{50}$) of 4 $\mu$m at a weight ratio of 7:3.

**Experimental Example 1: Measurement of Fine Particle Generation Ratio**

After pressing 3 g of the positive electrode materials prepared by Examples 1 and 2 and Comparative Examples 1 to 3 at a pressure of 9 tons, the volumetric cumulative particle size distribution (PSD) was measured to measure the generation ratio of fine particles of less than 1 $\mu$m. The particle size distribution was measured using Microtrac's S-3500, and the generation ratio of fine particles of 1 $\mu$m or less was converted to wt% based on the total weight of the positive electrode material. The measurement results are shown in Table 2 below.

[Table 2]

| | Example 1 | Example 2 | Comparative Example 1 | Comparative Example 2 | Comparative Example 3 |
|---|---|---|---|---|---|
| Fine particle generation ratio [%] | 8 | 10 | 15 | 17 | 19 |

Through Table 2 above, it can be confirmed that the positive electrode materials of Examples 1 to 2 have lower particle generation ratios than the positive electrode materials of Comparative Examples 1 to 3.

**Experimental Example 2: Measurement of Gas Increase Ratio**

Each of the positive electrode materials prepared in Examples 1 and 2 and Comparative Examples 1 to 3 was mixed with carbon black and PVDF at a weight ratio of 96:2:2 in N-methylpyrrolidone to prepare a positive electrode composite, which was then applied to one side of an aluminum current collector, dried at 130°C, and rolled to manufacture a positive electrode.
A negative electrode used a lithium metal.
An electrode assembly was manufactured by interposing a porous polyethylene separator between the positive electrode manufactured as described above and the negative electrode, and the electrode assembly was positioned inside a case, and then, an electrolyte was injected into the case to manufacture a lithium secondary battery. In this case, the electrolyte was prepared by dissolving 1.0 M concentration of lithium hexafluorophosphate ($LiPF_6$) in an organic solvent composed of ethylene carbonate/ethyl methyl carbonate/diethyl carbonate (mixed volume ratio = 3:4:3).
Each lithium secondary battery thus prepared was charged to SOC 100, stored at 60°C for 8 weeks, and then perforated in a vacuum chamber to discharge the gas inside the battery and capture inside the vacuum chamber. The gas generation amount for the gas in the chamber was analyzed using a gas chromatography-flame ionization detector (GC-FID) and the gas increase ratio was calculated. The calculation results are shown in Table 3 below.

[Table 3]

| | Example 1 | Example 2 | Comparative Example 1 | Comparative Example 2 | Comparative Example 3 |
|---|---|---|---|---|---|
| Gas increase ratio [%] | 10 | 13 | 24 | 23 | 37 |

Through Table 3 above, it can be confirmed that the gas increase ratio of the positive electrode materials of Examples 1 and 2 is lower than that of the positive electrode materials of Comparative Examples 1 to 3.

**Claims**

1.  A positive electrode material comprising:

    a first positive electrode active material having a secondary particle form in which a plurality of primary particles are aggregated, comprising nickel, cobalt and manganese, containing nickel in an amount of 70 mol% or more among total metals, and having a first average particle diameter ($D_{50}$); and
    a second positive electrode active material having a second average particle diameter ($D_{50}$) different from the first average particle diameter ($D_{50}$),
    wherein the first positive electrode active material has an average aspect ratio, which is an arithmetic mean value of an aspect ratio defined by the following Equation 1, of 0.86 to 0.94, and an average compactness, which is an arithmetic mean value of a compactness defined by the following Equation 2, of 0.89 to 0.96:

    $$[Equation\ 1]$$

    $$Aspect\ ratio = r_a/R$$

[Equation 2]

$$\text{Compactness} = r_c/R$$

in Equations 1 and 2, R is a length of a long axis passing through the center of the first positive electrode active material particle, $r_a$ is a length of a short axis passing through the center of the first positive electrode active material particle, and $r_c$ is a diameter of a circle having the same area as the area of the first positive electrode active material.

2. The positive electrode material according to claim 1, wherein the first positive electrode active material has an average roundness, which is an arithmetic mean value of a roundness defined by the following Equation 3, of 0.79 to 0.88:

[Equation 3]

$$\text{Roundness} = [(4 \times \text{Area})/(\pi \times R^2)]$$

in Equation 3, R is the length of the long axis passing through the center of the first positive electrode active material particle, and Area is an actual area of the first positive electrode active material particle.

3. The positive electrode material according to claim 1, wherein the first positive electrode active material has a composition represented by the following Formula 1:

[Formula 1]      $Li_{x1}Ni_{a1}Co_{b1}Mn_{c1}M^1_{d1}O_2$

in Formula 1, $M^1$ may be one or more selected from the group consisting of Al, B, Co, W, Mg, V, Ti, Zn, Ga, In, Ru, Nb, Sn, Sr, and Zr, $1 \leq x1 \leq 1.1$, $0.6 \leq a1 \leq 1.0$, $0 \leq b1 \leq 0.3$, $0 \leq c1 \leq 0.3$, and $0 \leq d1 < 0.15$.

4. The positive electrode material according to claim 1, wherein the average aspect ratio of the first positive electrode active material is 0.90 to 0.94.

5. The positive electrode material according to claim 1, wherein the average compactness of the first positive electrode active material is 0.90 to 0.95.

6. The positive electrode material according to claim 2, wherein the average roundness of the first positive electrode active material is 0.82 to 0.88.

7. The positive electrode material according to claim 1, wherein the first average particle diameter ($D_{50}$) of the first positive electrode active material is 8 $\mu$m to 20 $\mu$m.

8. The positive electrode material according to claim 1, wherein the second average particle diameter ($D_{50}$) of the second positive electrode active material is 2 $\mu$m to 8 $\mu$m.

9. The positive electrode material according to claim 1, wherein a ratio of the first average particle diameter ($D_{50}$) of the first positive electrode active material and the second average particle diameter ($D_{50}$) of the second positive electrode active material is 2:1 to 8:1.

10. The positive electrode material according to claim 1, wherein a weight ratio of the first positive electrode active material and the second positive electrode active material is 50:50 to 90:10.

11. The positive electrode material according to claim 1, wherein the second positive electrode active material has a composition represented by the following Formula 2:

[Formula 2]      $Li_{x2}Ni_{a2}Co_{b2}Mn_{c2}M^2_{d2}O_2$

in Formula 2, $M^2$ may be one or more selected from the group consisting of Al, B, Co, W, Mg, V, Ti, Zn, Ga, In, Ru, Nb, Sn, Sr, and Zr, $1 \leq x2 \leq 1.1$, $0.6 \leq a2 \leq 1.0$, $0 \leq b2 \leq 0.3$, $0 \leq c2 \leq 0.3$, and $0 \leq d2 < 0.15$.

**12.** A method for preparing a positive electrode material, the method comprising:

a step of introducing a transition metal aqueous solution, a basic compound, and an ammonium cation complex forming agent into a reactor, and mixing at a stirring speed of 900 rpm to 1100 rpm while maintaining pH in the reactor at 11 or higher to prepare a precursor for a first positive electrode active material;

a step of mixing the precursor for the first positive electrode active material and a lithium raw material, and performing heat treatment at a temperature of 850°C to 1000°C to prepare a first positive electrode active material having a first average particle diameter ($D_{50}$); and

a step of mixing the first positive electrode active material and a second positive electrode active material having a second average particle diameter ($D_{50}$) different from the first average particle diameter ($D_{50}$),

wherein the first positive electrode active material has a secondary particle form, in which a plurality of primary particles are aggregated, comprises nickel, cobalt, and manganese, and contains nickel in an amount of 70 mol% or more among total metals, and

the first positive electrode active material has an average aspect ratio, which is an arithmetic mean value of an aspect ratio defined by the following Equation 1, of 0.86 to 0.94, and an average compactness, which is an arithmetic mean value of a compactness defined by the following Equation 2, of 0.89 to 0.96:

$$[\text{Equation 1}]$$

$$\text{Aspect ratio} = r_a/R$$

$$[\text{Equation 2}]$$

$$\text{Compactness} = r_c/R$$

in Equations 1 and 2, R is a length of a long axis passing through the center of the first positive electrode active material particle, $r_a$ is a length of the short axis passing through the center of the first positive electrode active material particle, and $r_c$ is a diameter of a circle having the same area as the area of the first positive electrode active material.

**13.** The method for preparing a positive electrode material according to claim 12, wherein the first positive electrode active material has an average roundness, which is an arithmetic mean value of roundness defined by the following Equation 3, of 0.79 to 0.88:

$$[\text{Equation 3}]$$

$$\text{Roundness} = [(4 \times \text{Area})/(\pi \times R^2)]$$

in Equation 3, R is the length of the long axis passing through the center of the first positive electrode active material particle, and Area is an actual area of the first positive electrode active material particle.

**14.** A positive electrode comprising the positive electrode material of claim 1.

**15.** A lithium secondary battery comprising the positive electrode according to claim 14, a negative electrode, a separator disposed between the positive electrode and the negative electrode, and an electrolyte.

## INTERNATIONAL SEARCH REPORT

| International application No. |
| --- |
| **PCT/KR2024/018898** |

| A. | CLASSIFICATION OF SUBJECT MATTER |
| --- | --- |

**H01M 4/36**(2006.01)i; **H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01G 53/00(2006.01); H01M 10/052(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 니켈(nikel, Ni), 코발트(cobalt, Co), 망간(manganese, Mn), 양극(cathode), 활물질(active material), 입경(particle size), 리튬이차전지(lithium secondary battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2021-0117212 A (LG CHEM, LTD.) 28 September 2021 (2021-09-28)<br>See claims 2, 10 and 12, and paragraph [0110]. | 1-15 |
| Y | CN 116534912 A (NINGXIA BAICHUAN NEW MATERIAL CO., LTD.) 04 August 2023 (2023-08-04)<br>See claim 1, and paragraphs [0038], [0045] and [0052]. | 1-15 |
| A | KR 10-2019-0041715 A (LG CHEM, LTD.) 23 April 2019 (2019-04-23)<br>See claim 1, and paragraphs [0047] and [0165]-[0171]. | 1-15 |
| A | KR 10-2022-0150832 A (LG CHEM, LTD.) 11 November 2022 (2022-11-11)<br>See claims 1 and 5-8. | 1-15 |
| A | KR 10-2022-0091419 A (LG CHEM, LTD.) 30 June 2022 (2022-06-30)<br>See claims 1, 14, 15 and 18. | 1-15 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **07 March 2025** | **07 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/018898**

| Patent document cited in search report | | | Publication date (day/month/year) | Patent family member(s) | | | Publication date (day/month/year) |
|---|---|---|---|---|---|---|---|
| KR | 10-2021-0117212 | A | 28 September 2021 | CN | 115053368 | A | 13 September 2022 |
| | | | | CN | 115053368 | B | 19 December 2023 |
| | | | | EP | 4089764 | A1 | 16 November 2022 |
| | | | | JP | 2023-514346 | A | 05 April 2023 |
| | | | | JP | 7456671 | B2 | 27 March 2024 |
| | | | | KR | 10-2736090 | B1 | 02 December 2024 |
| | | | | US | 2023-0073433 | A1 | 09 March 2023 |
| | | | | WO | 2021-187907 | A1 | 23 September 2021 |
| CN | 116534912 | A | 04 August 2023 | None | | | |
| KR | 10-2019-0041715 | A | 23 April 2019 | KR | 10-2325727 | B1 | 12 November 2021 |
| KR | 10-2022-0150832 | A | 11 November 2022 | CN | 117203789 | A | 08 December 2023 |
| | | | | EP | 4318653 | A1 | 07 February 2024 |
| | | | | JP | 2024-514919 | A | 03 April 2024 |
| | | | | US | 2024-0208841 | A1 | 27 June 2024 |
| | | | | WO | 2022-235047 | A1 | 10 November 2022 |
| KR | 10-2022-0091419 | A | 30 June 2022 | CN | 116195094 | A | 30 May 2023 |
| | | | | EP | 4199152 | A1 | 21 June 2023 |
| | | | | JP | 2023-544572 | A | 24 October 2023 |
| | | | | US | 2023-0369578 | A1 | 16 November 2023 |
| | | | | WO | 2022-139516 | A1 | 30 June 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230169313

- KR 1020240166750